# EUROPEAN PATENT SPECIFICATION

(11) **EP 3 052 982 B1**
(45) Date of publication and mention of the grant of the patent: **23.08.2023**
(21) Application number: 14821902.5
(22) Date of filing: 01.10.2014
(51) Int. Cl.: G02B 19/00, G02B 27/00

(54) **COLLIMATION AND HOMOGENIZATION SYSTEM FOR AN LED LUMINAIRE**
KOLLIMIERUNGS- UND HOMOGENISIERUNGSSYSTEM FÜR EINE LED-LEUCHTE
SYSTÈME DE MISE AU POINT ET D'HOMOGÉNÉISATION POUR LUMINAIRE À DEL

(43) Date of publication of application: 10.08.2016
(73) Proprietor: Robe Lighting s.r.o., 756 61 Roznov pod Radhostem (CZ)
(72) Inventor: JURIK, Pavel, Prostredni Becva, 75656 (CZ)
(74) Representative: Murgitroyd & Company
(86) International application number: PCT/US2014/058682
(87) International publication number: WO 2015/051031

(56) References cited:
- EP-A1- 1 710 495
- WO-A1-2012/004760
- WO-A2-2013/098387
- JP-A- 2012 084 298
- US-A1- 2008 137 345

## Description

### TECHNICAL FIELD OF THE INVENTION

The present invention generally relates to a method for controlling the light output from an array of LEDs when used in a light beam producing luminaire, specifically to a method relating to improving the homogenization and collimation of the LEDs and for controlling the beam angle of the array.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will typically provide control over the pan and tilt functions of the luminaire allowing the operator to control the direction the luminaire is pointing and thus the position of the light beam on the stage or in the studio. This position control is often done via control of the luminaire's position in two orthogonal rotational axes usually referred to as pan and tilt. Many products provide control over other parameters such as the intensity, color, focus, beam size, beam shape and beam pattern. Additionally it is becoming common to utilize high power LEDs as the light source in such luminaires and, for color control, it is common to use an array of LEDs of different colors. For example a common configuration is to use a mix of Red, Green and Blue LEDs. This configuration allows the user to create the color they desire by mixing appropriate levels of the three colors. For example illuminating the Red and Green LEDs while leaving the Blue extinguished will result in an output that appears Yellow. Similarly Red and Blue will result in Magenta and Blue and Green will result in Cyan. By judicious control of the LED controls the user may achieve any color they desire within the color gamut set by the LED colors in the array. More than three colors may also be used and it is well known to add an Amber or White LED to the Red, Green and Blue to enhance the color mixing and improve the gamut of colors available. The products manufactured by Robe Show Lighting such as the Robin 600 LEDWash are typical of the art.

The differently colored LED dies may be arranged on packages in the luminaire such that there is physical separation between each color of LED, and this separation, coupled with differences in die size for each color, may affect the spread of the individual colors and results in inadequate mixing of the different colors along with objectionable spill light and color fringing of the combined mixed color output beam. It is common to use a lens or other optical device in front of each LED package to control the beam shape and angle of the output beam; however these optical devices may have differing effect for different colors and color fringing or other aberrations may be visible in the output beam. It would be advantageous to have a system where stray light and aberrations are well controlled.

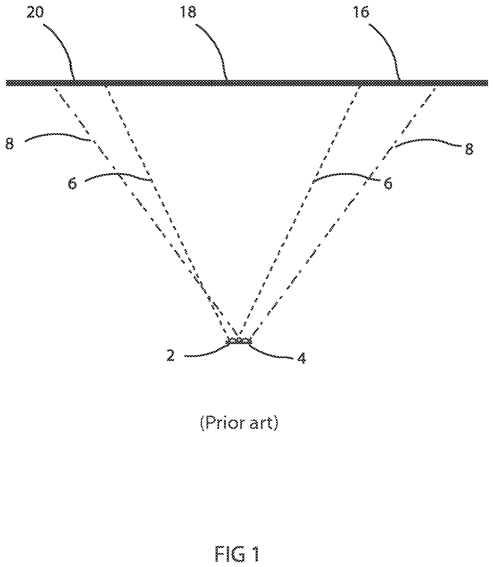

**Figure 1** illustrates a prior art system showing two LEDs in a package as may be used in a luminaire. LED **2** and LED **4** may be of differing colors and, due to the different optical properties and construction of the LED dies **2**, **4** produce light beams **6** and **8** that differ in beam spread. The differing beam spreads mean that the light beams from LEDs **2** and **4** will impinge on an illuminated object **18** in such a way that areas **20** and **16** of the object are illuminated by a single LED only rather than the desired mix of both. This results in areas **20** and **16** being colored differently from the central mixed area and appearing as colored fringes. Only two (2) LEDs are illustrated in **Figure 1** for clarity and simplicity. It should be appreciated that the same problem exists with systems incorporating more than two colors of LED.

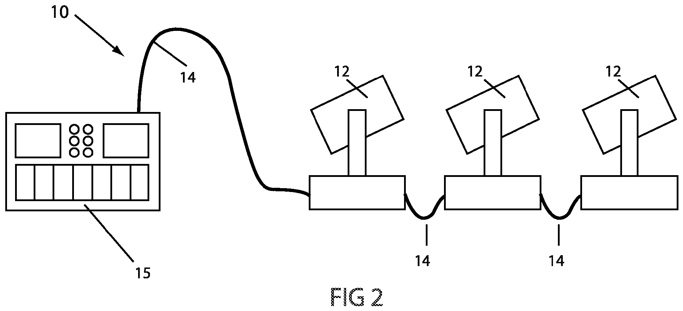

**Figure 2** illustrates a typical multiparameter automated LED luminaire system **10**. These systems commonly include a plurality of multiparameter automated luminaires **12** which typically each contain on-board an array of LEDs, and electric motors coupled to mechanical drives systems and control electronics (not shown). In addition to being connected to mains power either directly or through a power distribution system (not shown), each luminaire is connected is series or in parallel to data link **14** to one or more control desk(s) **15**. The luminaire system **10** is typically controlled by an operator through the control desk **15**. Consequently, to affect this control, both the control desk **10** and the individual luminaires typically include electronic circuitry as part of the electromechanical control system for controlling the automated lighting parameters.

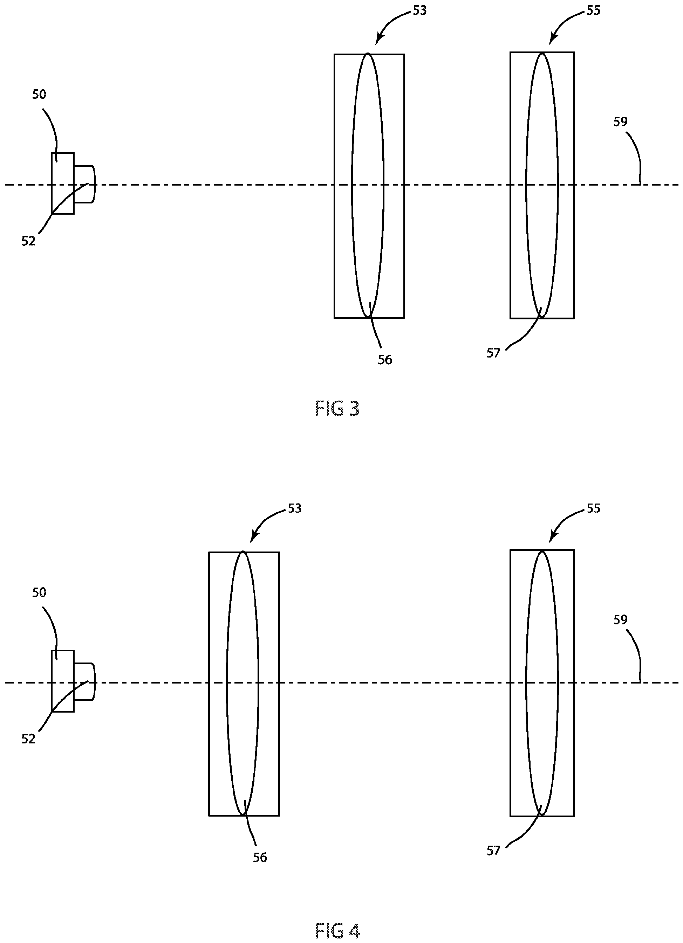

**Figure 3** and **Figure 4** illustrate an optical system used in the prior art to provide a variable beam angle or zoom to an automated LED luminaire. Each LED **50** which may be fitted with a primary optic **52** has an associated pair of lenses **53** and **55**. Lenses **53** and **55** may be separate lenses or each part of an array of lenses covering the entire LED array. Lenses **53** and **55** may each comprise a single optical element **56** and **57** respectively. In operation at least one of lens **53** or lens **55** is stationary with respect to LED **50** while the other may move along optical axis **59**. In the example illustrated in Figures 3 and 4 lens **55** is fixed relative to LED **50** while lens **53** is able to move along optical axis **59**. **Figure 3** shows lens **53** in a first position and **Figure 4** shows lens **53** in a second position closer to LED **50**. This varying relative position between LED **50**, lens **53** and lens **55** provides a beam angle or zoom to the light beam from LED **50**. Such systems are often limited in their zoom range by optical problems caused by the color separation and inadequate beam homogenization. They may further be limited by requiring large movements of the lenses.

This is a need for an optical system for an LED automated luminaire which provides improved color homogenization and beam collimation while also providing improved zoom range.

International Patent Application Publication No. WO 2012/004760 A1 discloses an optical zoom assembly for non-imaging illumination applications and a luminaire using the same. In one example, a light emitting diode chip provides light to an optical conductor having a plurality of transmission paths that enable the mixing of the light. A collector lens is disposed serially and coaxially with the optical conductor to the mixed light received from the optical conductor. A zoom subassembly, including one or more optical lenses located serially and coaxially with the central optical axis, is movable coaxially with respect to the collector lens to create a beam of light having a divergence profile controlled by a variable spacing between the one or more optical lenses and the collector lens.

European Patent Application Publication No. EP 1 710 495 A1 describes an antidazzle device for a LED light source. The antidazzle device comprises a main shielding body which in its lower part defines a taper seat for the housing of at least one LED light source, to the side it has side walls which surround said at least one LED light source and it is open at the top. Further, the antidazzle device comprises a second shielding body.

Further, Japanese Patent Application Publication No. JP 2012 084298 A discloses a light irradiation device.
Further relevant prior art is disclosed in WO2013/098387A and US4151584 A.

### SUMMARY

The invention is defined in claim 1. Particular embodiments are set out in the dependent claims.
The specification and drawings include arrangements and features which while not literally defined in the present claim set are part of the disclosure of the multiple embodiments of the invention. Any arrangements outside the scope of the claims are provided as background and to assist in understanding the invention.
In addition, it is appreciated that various of the arrangements of the specification while not literally claimed in the appended claims are configured for use with or in combination with the claimed arrangements.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
**FIGURE** 1 illustrates a prior art LED lighting system;
**FIGURE 2** illustrates a typical automated lighting system;
**FIGURE 3** illustrates optical components of a prior art LED luminaire;
**FIGURE 4** illustrates optical components of a prior art LED luminaire;
**FIGURE 5** illustrates optical components of an arrangement of the specification of an LED luminaire not herein claimed in the present claim set;
**FIGURE 6** illustrates a front view of the collimating and mixing optic **80** and LED **60 of** **Figure 5****;**
**FIGURE 7** illustrates a front view of the light integrator **102 of** **Figure 5****;**
**FIGURE 8** illustrates an arrangement of the specification not covered in the present set of claims.
**FIGURE 9** illustrates an arrangement of an LED luminaire not covered in the present set of claims;
**FIGURE 10** illustrates a front view of the collimating and mixing optic **80** and LED **60 of** **Figure 5****;**
**FIGURE 11** illustrates a front view of the light integrator **102 of** **Figure 5****;**
**FIGURE 12** illustrates an arrangement of the specification not covered in the present set of claims;
**FIGURE 13** illustrates an arrangement of an LED luminaire not claimed in the present claim set;
**FIGURE 14** illustrates an arrangement of an LED luminaire not claimed in the present claim set;
**FIGURE 15** illustrates an embodiment of the LED luminaire with light spill reducing element as claimed;
**FIGURE 16** illustrates in an alternative embodiment a front view of the systems illustrated in Figure 15 mounted in a square array arrangement;
**FIGURE 17** illustrates an alternative embodiment of the optical element of the system molded in a quadrant shape;
**FIGURE 18** illustrates an embodiment of the light integrator;
**FIGURE 19** illustrates an alternative embodiment of the light integrator;
**FIGURE 20** illustrates an embodiment of the light integrator fitted with a gobo or pattern wheel not claimed in the present claim set;
**FIGURE 21** illustrates an alternative embodiment of the light integrator fitted with a gobo or pattern wheel not claimed in the present claim set;
**FIGURE 22** illustrates an alternative embodiment, not herein claimed, of the light integrator fitted with a gobo or pattern wheel;
**FIGURE 23** illustrates an embodiment of the light integrator fitted with a gobo or pattern wheel;
**FIGURE 24** illustrates an embodiment of the light integrator fitted with a static gobo or pattern wheel and a rotating gobo or pattern wheel not claimed in the present claim set;
**FIGURE 25** illustrates an example of a full static gobo wheel not claimed in the present claim set;
**FIGURE 26** illustrates an example of a full rotating gobo wheel not claimed in the present claim set;
**FIGURE 27** illustrates an alternative arrangement not covered by the present claims of a full static gobo wheel;
**FIGURE 28** illustrates an arrangement of the specification not covered by the present claims of a partial static gobo wheel;
**FIGURE 29** illustrates an arrangement of the specification not covered by the present claims of an array of light integrators of a light integrator fitted each fitted with a partial gobo wheel;
**FIGURE 30** illustrates a further arrangement of the specification not covered by the present claims of a light integrator fitted with a static gobo or pattern wheel and a rotating gobo or pattern wheel; and;
**FIGURE 31** illustrates another alternative embodiment of a light integrator fitted with a static gobo or pattern wheel and a rotating gobo or pattern wheel.

### DETAILED DESCRIPTION OF THE INVENTION

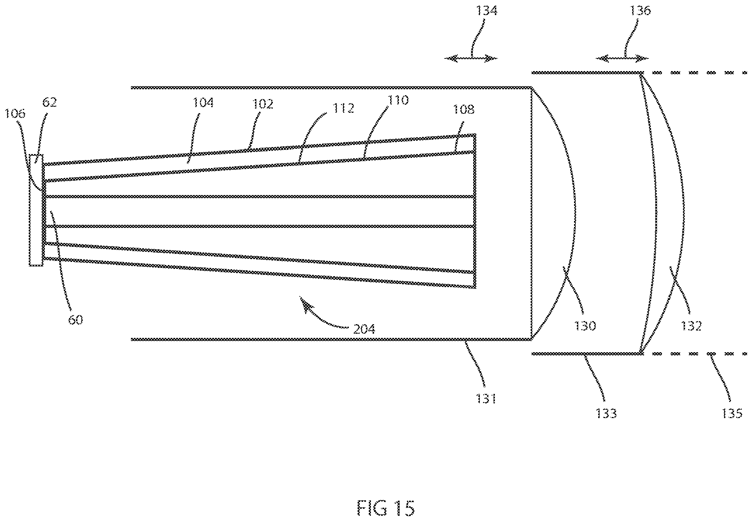

A preferred embodiment of the present invention is illustrated in Figure 15, like numerals being used to refer to like and corresponding parts of the various drawings.

The present invention generally relates to a method for controlling the light output from an array of LEDs when used in a light beam producing luminaire, specifically to a method relating to improving the homogenization and collimation of the LEDs and for controlling the beam angle of the array.

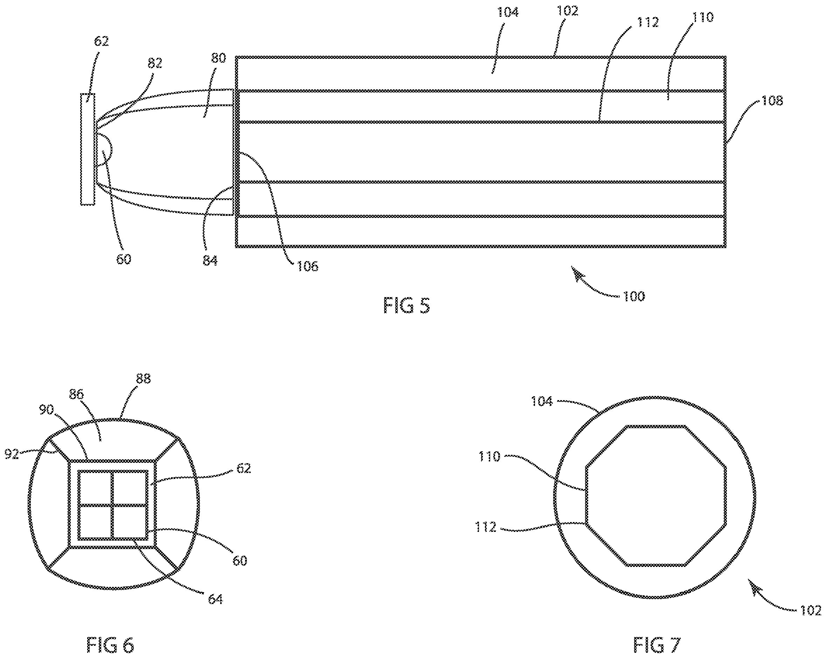

Figure 5 illustrates an example optical system of the specification, outside the scope of the present claims. LED 60, which may include a primary optic, is mounted on substrate 62. LED 60 may contain a single color die or may contain multiple dies, each of which may be of differing colors. The light output from the dies in LED 60 enters collimating and mixing optic 80 at light entry port 82. Collimating and mixing optic 80 may be a solid optic using total internal reflection (TIR) to direct the light or may be a hollow reflective surface. Collimating and mixing optic 80 may have four sides 86, each of which may be curved with cornered sides 92. The end view of collimating and mixing optic 80 in Figure 6 combined with side illustration of the collimating and mixing optic 80 in Figure 5 illustrate details an embodiment of the shape. The combination square sided shape with curved sides provides excellent mixing of the light from the dies 64 in LED 60. A further feature of collimating and mixing optic 80 is that it directs the reflected light to an external focal point which is comparatively close to its output port 84 of the collimating and mixing optic 80.

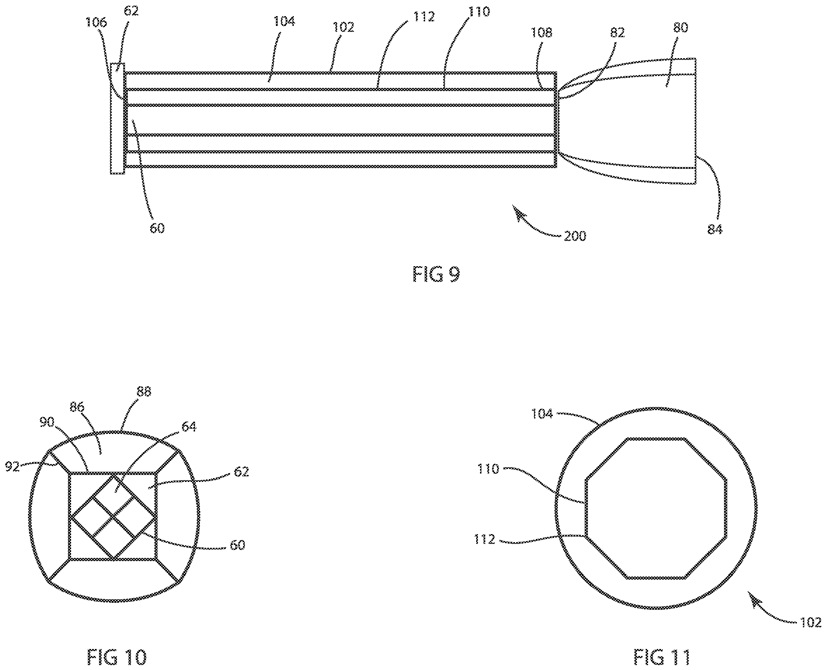

In the arrangements, not covered in the claims, illustrated in Figure 6 the configuration of the plurality of LED dies 64 in LED 60 is square and aligned with the sides 86 of the collimator 80. In other arrangements, not covered in the claims, the alignment of the dies with the collimator sides may not be aligned, for example as illustrated in **Figure 10**. In alternative arrangements of the specification, not claimed in the present claims, of those illustrated in **Figure 6** and **Figure 10** the collimator may have a plurality of sides of three, four or more sides. In further arrangements not claimed in the present claims, the arrangement of the dies in the LED array may be configured in different shapes and paired with collimators with matching or divergent shapes.

In different arrangements, not covered in the claims, the degree of curvature of the sides **86** may vary - flatter for some configurations and more curved for other configurations. Additionally, the sharpness of the corners **92** between the sides may vary among different collimators - sharper for some configurations and rounder for others. The selection of the number of sides and the curvature of the sides and curvature of the corners is/are tradeoffs between the degree of mixing desired and acceptable light loss for a particular configuration or application.

In the arrangement, not covered by the claims, shown in **Figure 5****,** the reflected light exits collimating and mixing optic **80** at port **84** and enters light integrator optic **102** at its entry port **106**. Light integrator **102** is a device utilizing internal reflection so as to collect, homogenize and constrain and conduct the light from collimating and mixing optic **80**. Light integrator **102** may be a hollow tube with a reflective inner surface such that light impinging into the entry port may be reflected multiple times along the tube before leaving at the exit port **108**. Light integrator **102** may be a square tube, a hexagonal tube, a heptagonal tube, an octagonal tube, a circular tube, or a tube of any other cross section. In a further embodiment light integrator **102** may be a solid rod constructed of glass, transparent plastic or other optically transparent material where the reflection of the incident light beam within the rod is due to total internal reflection (TIR) from the interface between the material of the rod and the surrounding air. The integrating rod may a square rod, a hexagonal rod, a heptagonal rod, an octagonal rod, a circular rod, or a rod of any other cross section. Integrator embodiments with a polygonal cross section have reflective sides **110** and corners **112** between the reflective sides as seen in **Figure 5** which includes a side cross sectional view of the integrator **102** and more easily seen in **Figure 7** a front exit port view of the integrator **102**.

In an embodiment the light integrator **102** may have a straight sided square cross section at the entrance port and a straight sided polygonal cross section with more than four sides at the exit port. The exit port may be pentagonal, hexagonal, heptagonal, octagonal, or have any other integral number of sides.

A feature of a light integrator **102** which comprises a hollow tube or solid rod where the sides of the rod or tube are essentially parallel and the entrance aperture **106** and exit aperture **108** are of the same size is that the divergence angle of light exiting the integrator **102** at exit port **108** will be the same as the divergence angle for light entering the integrator **102** at entry port **106**. Thus a parallel sided integrator **102** has no effect on the beam divergence and will transfer the position of the focal point of collimating and mixing optic **80** at its exit aperture **84** to the integrator's **102** exit aperture **108**. The light exiting integrator **102** will be well homogenized with all the colors of LED **60** mixed together into a single colored light beam and may be used as our output, or may be further modified by downstream optical systems.

Integrator **102** may advantageously have an aspect ratio where its length is much greater than its diameter. The greater the ratio between length and diameter, the better the resultant mixing and homogenization will be. Integrator **66** may be enclosed in a tube or sleeve **104** which provides mechanical protection against damage, scratches, and dust.

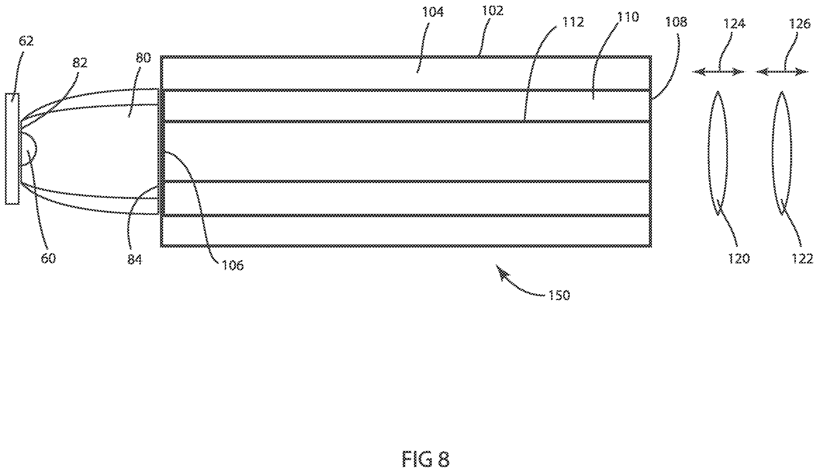

**Figure 8** illustrates further arrangements, not covered by the claims. Elements LED **60,** substrate **62,** collimating and mixing optic **80**, integrator **102**, are as described above for **Figure 5, Figure 6 and Figure 7**. In this arrangement the homogenized and focused light exiting from integrator **66** is directed through lens system **120** and **122**. Lenses **120** and **122** may be independently movable **124** and **126** along the optical axis so as to provide beam angle control over the light beam. Because the focal point of collimating and mixing optic **80** is short, a small motion of lenses **120** and **122** may cause a large change in beam angle. In one arrangement movements **124 126** of 10 mm in the position of lenses **120** and/or **122** may cause a change in beam angle from 5° to 50°. Thus providing an improved variable beam angle or zoom to an automated LED luminaire.

In further arrangements, not covered by the claims, lenses **120** and **122** may form an achromatic optical system such that it provides the same degree of beam angle change to long wavelength red light as it does to short wavelength blue light and thus avoids chromatic aberration. This ensures that the beams from the different colors of LED dies **64** in LED **60** are all the same size resulting in a uniformly colored combined beam. In yet further arrangements, not claimed, any number of lenses may be used as the lens system. In all cases, lenses may contain one or more optical elements. Lenses **120** and **122** are illustrated herein as bi-convex lenses however the invention is not so limited and lenses **120** and **122** may be any shaped optical element as well known in the art.

**Figure 9** illustrates an example of an optical system of the specification, not herein claimed. LED **60,** which may include a primary optic, is mounted on substrate **62.** LED **60** may contain a single color die **64** or may contain multiple dies **64,** each of which may be of differing colors. The light output from the dies **64** in LED **60** enters light integrator optic **102** at entry port **106**. Light integrator 102 may be of the same construction and configuration as in the embodiment illustrated in **Figure 5**. Light integrator **102** is a device utilizing internal reflection so as to collect, homogenize and constrain and conduct the light to the entry port 82 of collimating and mixing optic **80**. Light integrator **102** may be a hollow tube with a reflective inner surface such that light impinging into the entry port **106** may be reflected multiple times along the tube before leaving at the exit port **108**. Light integrator **102** may be a square tube, a hexagonal tube, a heptagonal tube, an octagonal tube, a circular tube, or a tube of any other cross section. In a further embodiment light integrator **102** may be a solid rod constructed of glass, transparent plastic or other optically transparent material where the reflection of the incident light beam within the rod is due to total internal reflection (TIR) from the interface between the material of the rod and the surrounding air. The integrating rod may a square rod, a hexagonal rod, a heptagonal rod, an octagonal rod, a circular rod, or a rod of any other cross section.

A feature of a light integrator **102** which comprises a hollow tube or solid rod where the sides of the rod or tube are essentially parallel and the entrance aperture **106** and exit aperture **108** are of the same size is that the divergence angle of light exiting the integrator **102** exit port **108** will be the same as the divergence angle for light entering the integrator **102** at entry port **106** from LED **60**. Thus a parallel sided integrator **102** has no effect on the beam divergence and will transfer the light from LED **60** to its exit aperture **108**. The light exiting integrator **102** will be well homogenized with all the colors of LED **60** mixed together into a single colored light beam.

Integrator **102** may advantageously have an aspect ratio where its length is much greater than its diameter. The greater the ratio between length and diameter, the better the resultant mixing and homogenization will be. Integrator **102** may be enclosed in a tube or sleeve **104** which provides mechanical protection against damage, scratches, and dust.

Light exiting integrator **102** at exit port **108** enters collimating and mixing optic 80 at its entry port **82**. Collimating and mixing optic **80** may be of the same construction and configuration as the collimating and mixing optic in embodiment illustrated in **Figure 5**. Collimating and mixing optic **80** may be a solid optic using total internal reflection (TIR) to direct the light or may be a hollow reflective surface. Collimating and mixing optic **80** may have four sides, each of which may be curved. The side view of collimating and mixing optic **80** included in **Figure 9** and the end view of collimating and mixing optic **80** in **Figure 10** illustrate the detail of this shape. The combination square sided shape with curved sides provides further mixing of the light from the dies in LED **60** as homogenized by integrator **102**. A further feature of collimating and mixing optic **80** is that it directs the reflected light to an external focal point which is comparatively close to its output face.

In the arrangement, not covered by the claims, as shown in **Figure 9** the reflected light exits collimating and mixing optic **80** at exit port **84** and may be used as our output, or may be further modified by downstream optical systems.

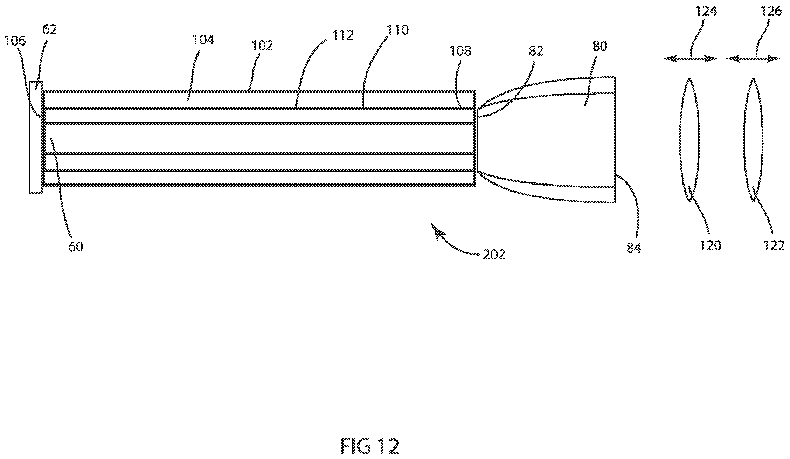

**Figure 12** illustrates a further arrangement of the specification, not herein claimed. Elements LED **60**, substrate **62**, collimating and mixing optic **80**, integrator **102**, can be as described above. In this arrangement, the homogenized and focused light exiting from collimating and mixing optic **80** is directed through lens system **120** and **122.** Lenses **120** and **122** may be independently movable along the optical axis so as to provide beam angle control over the exiting light beam. Because the focal point of collimating and mixing optic **80** is short, a small motion of lenses **120** and **122** may cause a large change in beam angle. In one arrangement, not herein claimed, a movement of 10 mm in the position of lenses **120** and/or **122** may cause a change in beam angle from 5° to 50°. Thus providing an improved variable beam angle or zoom to an automated LED luminaire.

In further arrangements, not herein claimed, lenses **120** and **122** may form an achromatic optical system such that it provides the same degree of beam angle change to long wavelength red light as it does to short wavelength blue light and thus avoids chromatic aberration. This ensures that the beams from the different colors of LED dies in LED **60** are all the same size resulting in a uniformly colored combined beam. In yet further embodiments any number of lenses may be used as the lens system. In all cases, lenses may contain one or more optical elements. Lenses **120** and **122** are illustrated herein as bi-convex lenses however the invention is not so limited and lenses **120** and **122** may be any shaped optical element as well known in the art and may include any number of lenses including a single lens. This applies to any of the embodiments discussed above

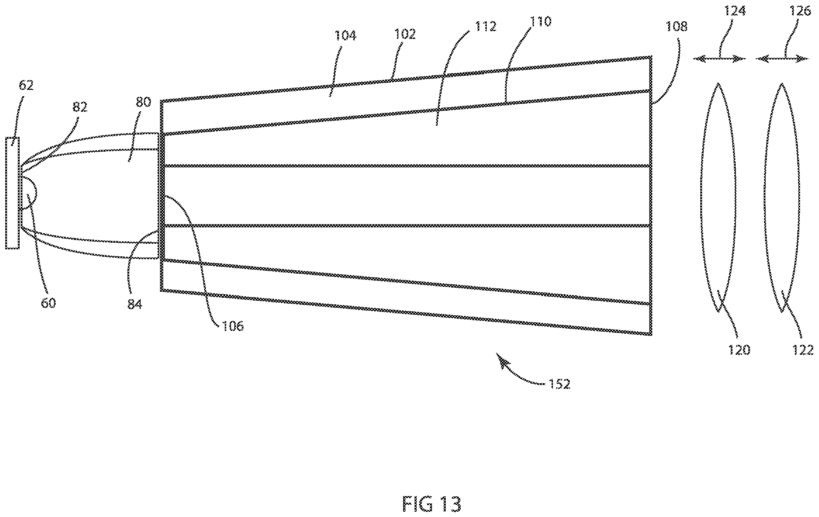

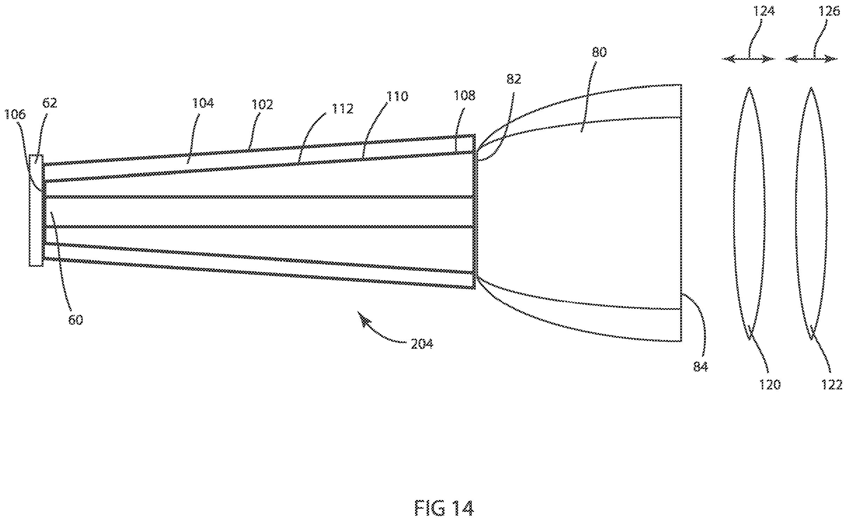

**Figure 13** and **Figure 14** illustrate further alternative arrangements, not herein claimed, of LED luminaires. In both of these arrangements s the light integrator **102**, whether solid or hollow, has sides **110** which are tapered so that entrance aperture **106** is smaller than the exit aperture **108**. The advantage of this structure is that the divergence angle of light exiting the integrator **102** at exit port **108** will be smaller than the divergence angle for light entering the integrator **102** at entry port **106**. The combination of a smaller divergence angle from a larger aperture serves to conserve the etendue of the system. Thus a tapered integrator **102** may provide similar functionality to a condensing optical system. Therefore some embodiments may not include optical elements 120 122 as discussed above while other embodiments may include such elements as discussed above with regard to embodiments with non-tapered integrators.

Figure 15 illustrates an embodiment of LED luminaires. In this embodiment the light integrator 102, whether solid or hollow, and with any number of sides, or with a square entry port 106 and a polygonal exit port 108 has sides 110 which are tapered so that entrance aperture 106 is smaller than the exit aperture 108. The advantage of this structure is that the divergence angle of light exiting the integrator 102 at exit port 108 will be smaller than the divergence angle for light entering the integrator 102 at entry port 106. The combination of a smaller divergence angle from a larger aperture serves to conserve the etendue of the system. Thus a tapered integrator 102 may provide similar functionality to a condensing optical system. Therefore some embodiments include optical elements 120 122 as discussed above with regard to embodiments with non-tapered integrators. This embodiment utilize lenses 130 and 132 as optical elements providing condensing, beam angle control, and focusing functionality as described above as a replacement for the collimating and mixing optic used in earlier embodiments. Lenses 130 and 132 may be meniscus lenses, piano convex lenses, bi-convex lenses, or other lenses as well known in the art. In the embodiment illustrated lens 130 is a plano-convex lens, and lens 132 is a meniscus lens.

Figure 15 also shows spill reducing elements 131 and 133. Spill reducing elements 131 and 133 may comprise hollow opaque thin walled tubes which are attached to, and move with, optical elements 130 and 132 respectively. These tubes reduce light spill from the exit port 108 which may impinge on adjacent light integrators and their associated optical systems. Spill reducing element **131** may be of a smaller diameter than spill reducing element **133** such that optical element **130** and its attached spill reducing element **131** may move within spill reducing element **133** such that optical elements **130** and **132** may move to be adjacent. An external further additional spill reducing element **135** may also be added to and may move with lens **132**. Lenses **130** may be moved as shown by arrow **134**, and lens **132** may be moved as shown by arrow **136**. Such movement allows changing the focal length, and thus the beam angle of the output light beam. Lenses **130** and **132** may move together as a pair with a single actuator, or, in a further embodiment, may move independently each with its own actuator.

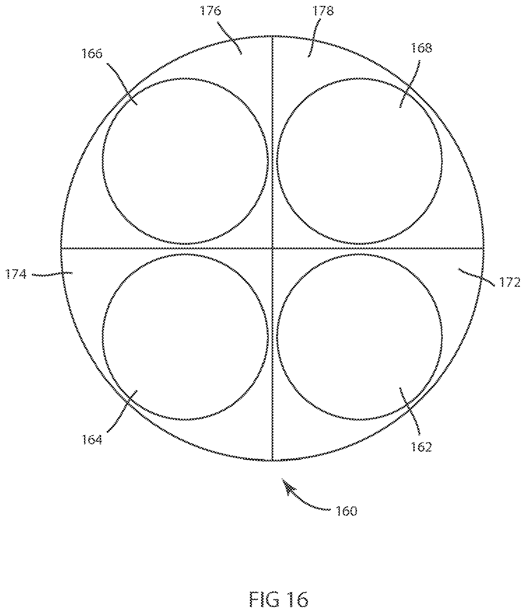

**Figure 16** shows an alternative embodiment of the layout of the front optical elements of the system. In, for example **Figure 15****,** there is a front optical element **132** which forms the final output lens of the system. **Figure 16** shows a front view of four of the systems **204** shown in **Figure 15** mounted in a square array. In this embodiment the four optical elements **162, 164, 166,** and **168 in** **Figure 16** each represent an identical example of element **132 in** **Figure 15****.** Optical element **162** is constructed as part of a larger, quadrant shaped, structure **172.** Structure **172** incorporating optical element **162** may be molded from a single piece of glass or optical plastic. Similarly optical element **164** is incorporated as part of quadrant **174,** optical element **166** is incorporated as part of quadrant **176,** and optical element **168** is incorporated as part of quadrant **178.** The incorporation of the optical elements into quadrants provides two desirable results. Firstly, four modules may be placed in a square array while representing an unbroken and clean appearance from the front with the four quadrants joining to provide a complete circle. Secondly, any remaining spill light from the optical modules will disperse and dissipate within the areas of the quadrants outside the optical elements, providing an attractive light glow between the optical elements.

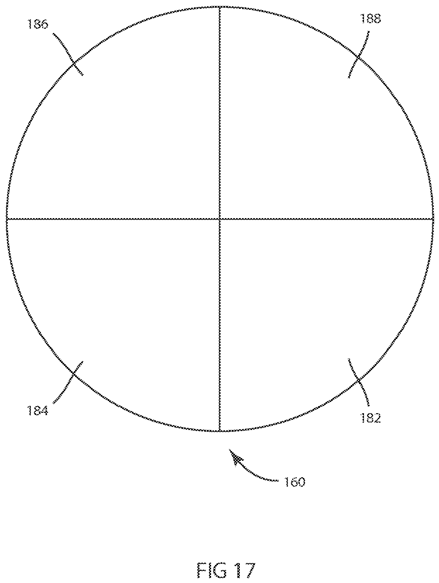

**Figure 17** shows a further alternative embodiment of the layout of the front optical elements of the system. In, for example **Figure 15****,** there is a front optical element **132** which forms the final output lens of the system. **Figure 16** shows a front view of four of the systems **204** shown in **Figure 15** mounted in a square array. In this embodiment the four optical elements **182, 184, 186,** and **188 in** **Figure 17** each represent an identical example of element **132 in** **Figure 15** molded into a quadrant shape. The configuration of the optical elements as quadrants provides two desirable results. Firstly, four modules may be placed in a square array while representing an unbroken and clean appearance from the front with the four quadrants joining to provide a complete circle. Secondly, any remaining spill light from the optical modules will disperse and dissipate within the areas of the quadrants outside the optical elements, providing an attractive light glow between the optical elements.

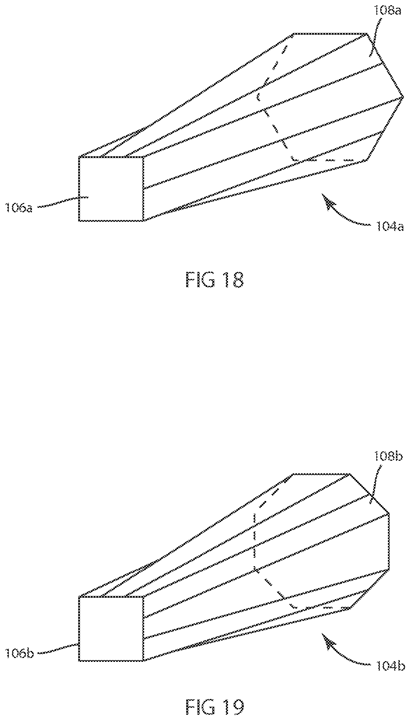

**Figure 18** illustrates an embodiment of the light integrator **104a** of the invention. In this embodiment entrance port **106a** is square in cross-section and exit port 108a is hexagonal in cross-section.

**Figure 19** illustrates an alternative embodiment of the light integrator 104b of the invention. In this embodiment entrance port 106b is square in cross-section and exit port 108b is octagonal in cross-section.

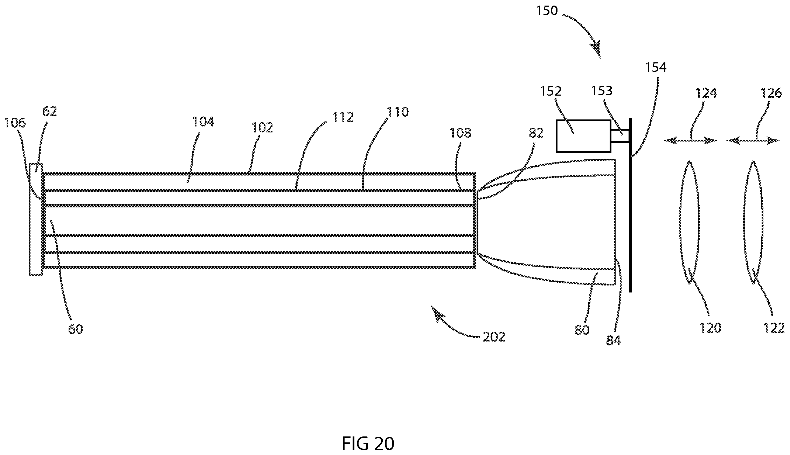

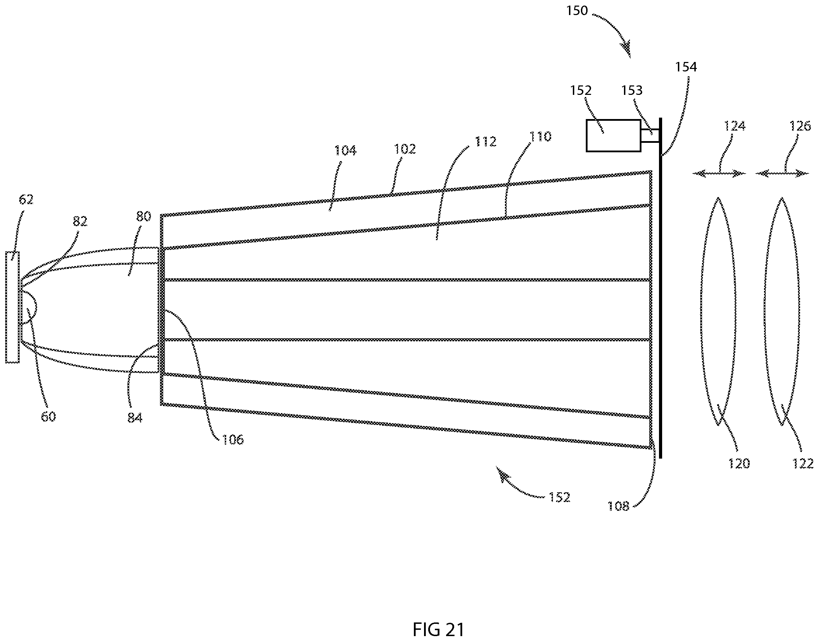

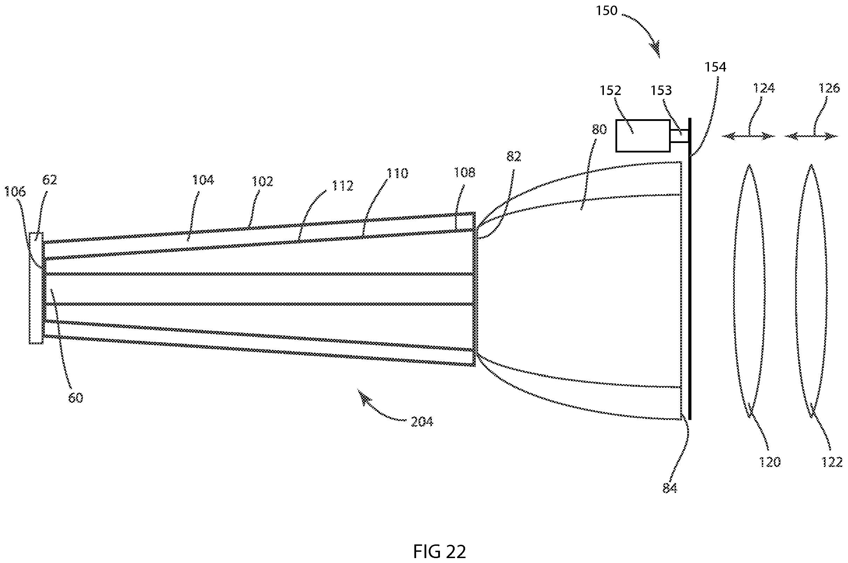

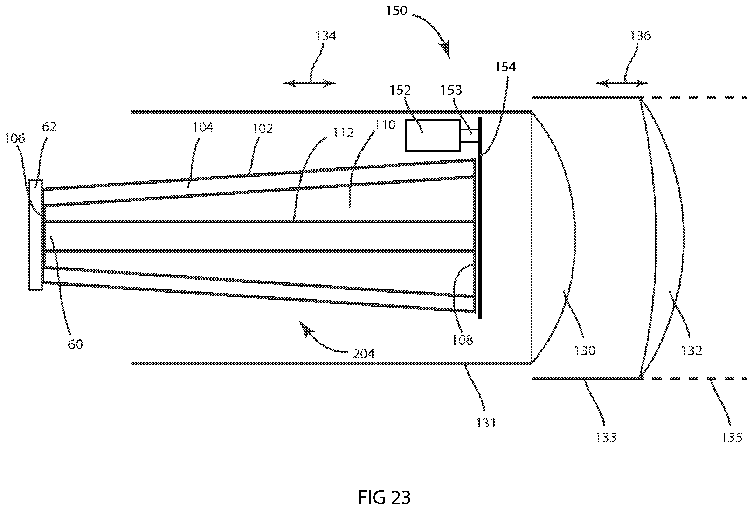

In the alternative arrangements of the specification, illustrated in **Figures 20****,** **21****,** **22** (arrangement of Figs 20, 21, 22, not herein claimed), **and** **Figure** 23 the optical system is further fitted with a gobo wheel system **150.** A gobo wheel contains patterns or images that will controllably mask the light exiting through port **84.** These images will then be projected by downstream optical elements to create a pattern projecting light beam. The lens system after the gobo wheel may be a zoom lens system **120** and **122** such as shown in **Figure 20** or any other projecting lens system as well known in the art. Gobo wheel154 may be rotated through motor **152** and shaft **153** in order to select different gobo patterns in front of exit aperture **84**. Gobo wheel system **150** may incorporate a static gobo wheel, a rotating gobo wheel, or both. The static gobo wheel or rotating gobo wheel may each be a full wheel, or a partial wheel.

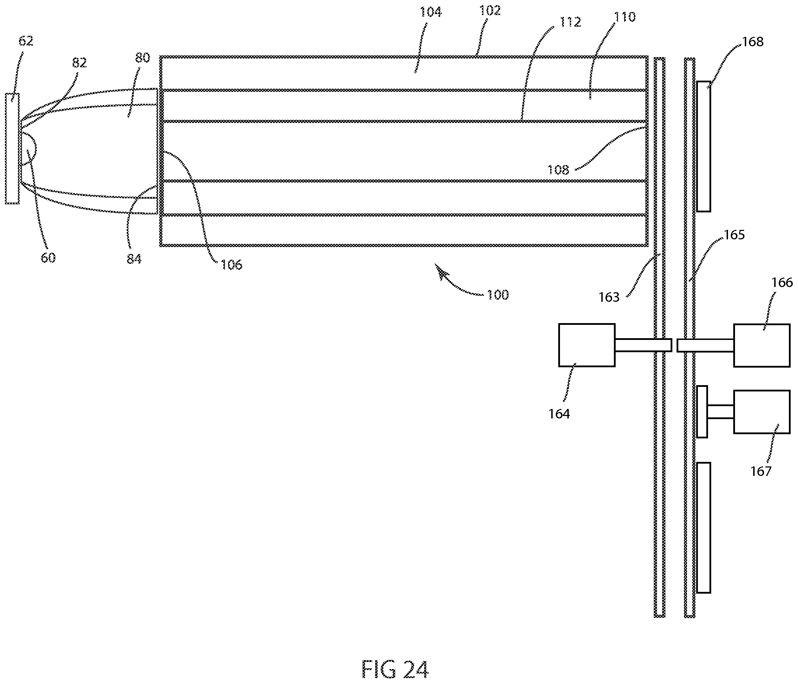

**Figure 24** illustrates both a full static gobo wheel and a full rotating gobo wheel as fitted to an embodiment of the invention. Gobo wheel 163 may be rotated through motor **164** in order to select different gobo patterns in front of exit aperture **108**. In yet further embodiments individual gobo patterns may be further rotated about their axes by supplementary motors in order to provide a moving rotating image. Such rotating gobo wheels are well known in the art. Rotating gobo wheel, **165,** is an example of such an embodiment. Rotating gobo wheel165 may be rotated through motor **166** in order to select different gobo patterns **168** in front of exit aperture **108**. Gobo patterns **168** may then be rotated about the optical axis of the system through motor **167.**

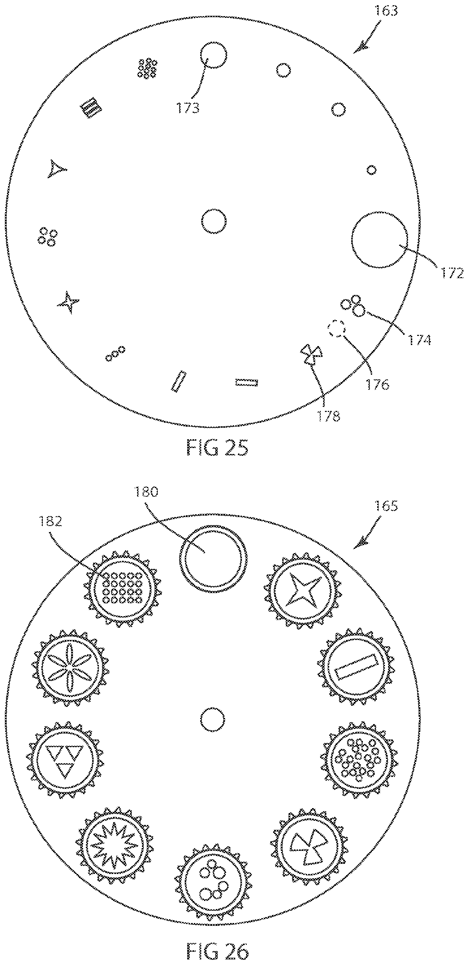

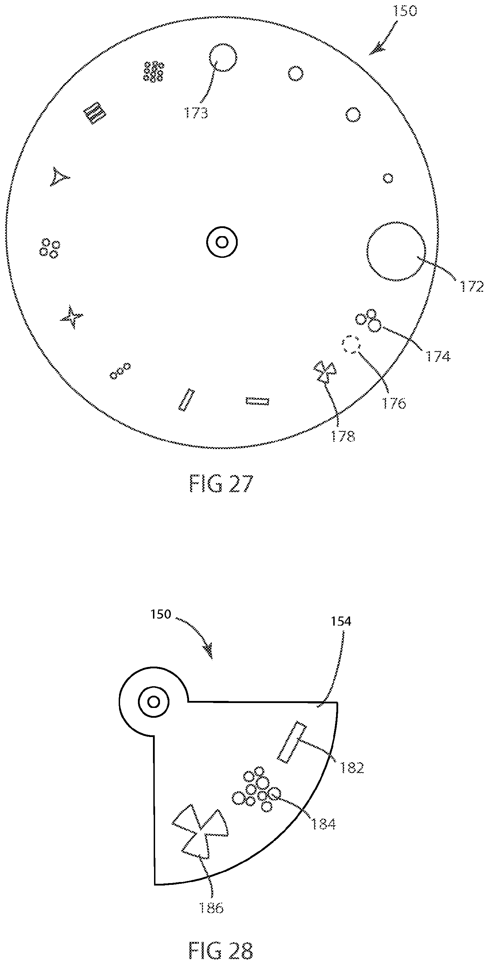

**Figure** 25 shows gobo wheel 163 in more detail in a further arrangement not herein claimed. Gobo wheel 163 contains a plurality of patterns including, for example, **172, 173, 174, 176,** and **178** that may be moved across and in front of the exit port of the light integrator by rotation about motor **164.** **Figure** 26 shows rotating gobo wheel 165 in more detail in a further arrangement, not herein claimed. Gobo wheel165 contains a plurality of patterns including, for example, **182** that may be moved across and in front of the exit port of the light integrator by rotation about motor **166.** These gobo patterns may then be rotated about the optical axis of the system through motor **167.** **Figure** 27 shows gobo wheel 150 in more detail in a further embodiment, not herein claimed. Gobo wheel 150 contains a plurality of patterns including, for example, **172, 173, 174, 176,** and **178** that may be moved across and in front of the exit port of the light integrator by rotation about motor **164.**

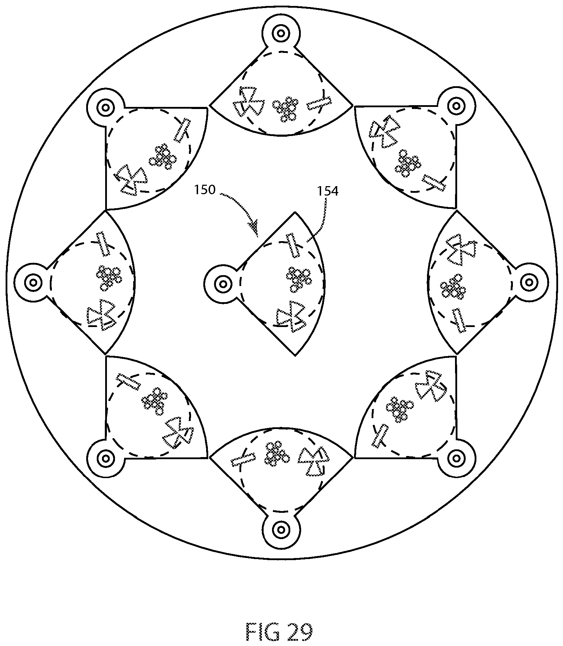

In further arrangements, not herein claimed, the gobo wheel may not be a complete circular disc as shown in **Figure 27****,** but may be a portion of a disc, or a flag so as to save space and provide a more limited number of gobo options. **Figure** 28, **not herein claimed,** illustrates an embodiment of a partial gobo wheel where gobo wheel154 is a quadrant of a circle containing three gobos, **182, 184,** and **186.** Such an arrangement with a partial wheel facilitates arrangements, not herein claimed, such as that illustrated in **Figure 29** where multiple light integrators are utilized in a single luminaire. Each of those light integrators may be fitted with an independent gobo system **150,** all or any of which may be individually or cooperatively controlled. Utilizing partial wheels **154** may allow a tighter packing density for the light integrators and optical systems without interference between the adjacent wheels. In the example illustrated nine light integrators and associated gobo systems **150** are utilized in a circular arrangement. However, the invention is not so limited and any number of light integrators in any arrangement may be utilized without departing from the invention.

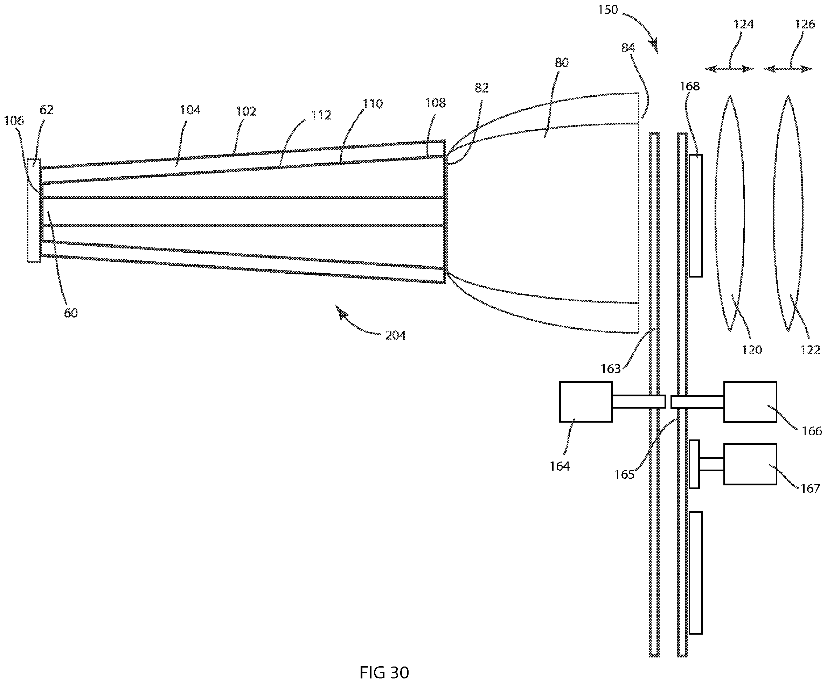

**Figure 30** illustrates both a full static gobo wheel and a full rotating gobo wheel as fitted as gobo system **150** to an alternative arrangement, not herein claimed. Gobo wheel163 may be rotated through motor **164** in order to select different gobo patterns in front of exit aperture **84.** In yet further arrangements, not herein claimed, individual gobo patterns may be further rotated about their axes by supplementary motors in order to provide a moving rotating image. Such rotating gobo wheels are well known in the art. Rotating gobo wheel, **165,** is an example of such an embodiment. Rotating gobo wheel165 may be rotated through motor **166** in order to select different gobo patterns **168** in front of exit aperture **108.** Gobo patterns **168** may then be rotated about the optical axis of the system through motor **167.**

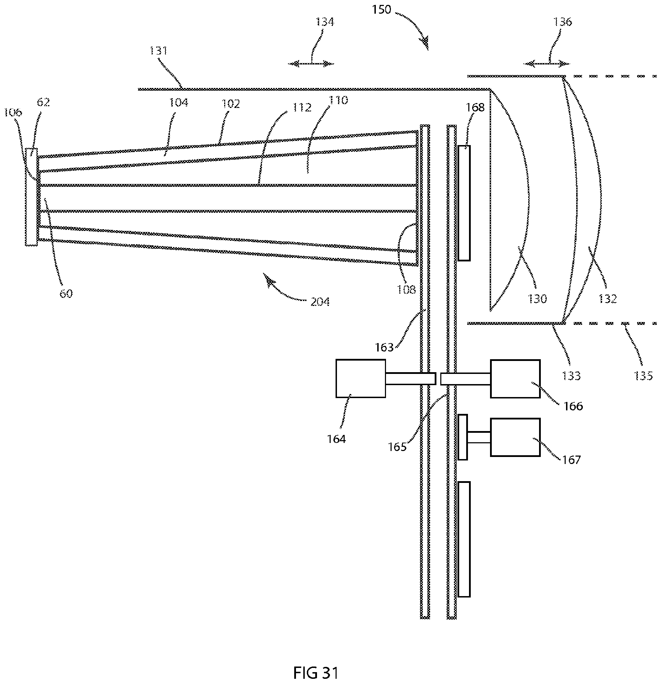

**Figure 31** illustrates both a full static gobo wheel and a full rotating gobo wheel as fitted as gobo system **150** to a preferred embodiment of the invention. Gobo wheel 163 may be rotated through motor **164** in order to select different gobo patterns in front of exit aperture **108.** In yet further embodiments individual gobo patterns may be further rotated about their axes by supplementary motors in order to provide a moving rotating image. Such rotating gobo wheels are well known in the art. Rotating gobo wheel, **165,** is an example of such an embodiment. Rotating gobo wheel165 may be rotated through motor **166** in order to select different gobo patterns **168** in front of exit aperture **108.** Gobo patterns **168** may then be rotated about the optical axis of the system through motor **167.**

In embodiments not covered by the claims both the static and rotating gobo patterns may be of any shape and may include colored images or transparencies. Additionally effects such as prisms, lenticular lenses, or break up glasses may be used . For example, the use of a lenticular lens may provide an elliptical beam from each light integrator and rotating that lenticular lens may rotate the elliptical beam about its optical axis. Cooperatively or independently rotating such lenticular lenses on a luminaire with multiple light integrators such as that illustrated in **Figure 29**, may provide new dynamic lighting effects for the operator.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto as defined in the appended set of claims.

## Claims

1. An automated luminaire, comprising:
a plurality of LED sources (60);
an elongated light integrator (102, 104a, 104b) configured to receive light from the plurality of LED sources (60);
a receiving lens (130) coupled to a first elongated spill shield (131), the receiving lens configured to receive light from the light integrator (102, 104a, 104b), the first spill shield (131) configured to move with the receiving lens (130);
an output lens (132) coupled to a second elongated spill shield (133), the output lens configured to receive light from the receiving lens (130), the second spill shield (133) configured to move with the output lens (132), and
wherein the spill shield (131) of the receiving lens (130) is nested in the spill shield (133) of the output lens (132).

2. The automated luminaire of claim 1, wherein the elongated light integrator (104a) has a square input cross section (106a) and a hexagonal output cross section (108a).

3. The automated luminaire of claim 1, wherein the elongated light integrator (104b) has a square input cross section (106b) and an octagonal output cross section (108b).

4. The automated luminaire of any of the preceding claims, wherein the elongated light integrator (102, 104a, 104b) is tapered so that an entrance aperture (106) is smaller than an exit aperture (108).

5. The automated luminaire of any of the preceding claims, wherein the receiving lens (130) and the output lens (132) are meniscus lenses, plano convex lenses, or bi- convex lenses.

6. The automated luminaire of claim 5, wherein the receiving lens (130) is a plano- convex lens and the output lens (132) is a meniscus lens.

7. The automated luminaire of any of the preceding claims, wherein the spill shield (131) of the receiving lens (130) and the spill shield (133) of the output lens (132) comprise hollow, opaque walled tubes.

8. The automated luminaire of any of the preceding claims, wherein a further spill shield (135) is attached to, and is movable with, the output lens (132).

9. The automated luminaire of any of the preceding claims, wherein the receiving lens (130) is movable independently of the output lens (132).

## Patentansprüche

1. Eine automatisierte Leuchte, die Folgendes beinhaltet:
eine Vielzahl von LED-Quellen (60);
einen länglichen Lichtintegrator (102, 104a, 104b), der konfiguriert ist, um Licht von der Vielzahl von LED-Quellen (60) zu empfangen;
eine Empfangslinse (130), die mit einer ersten länglichen Überlaufabschirmung (131) gekoppelt ist, wobei die Empfangslinse konfiguriert ist, um Licht von dem Lichtintegrator (102, 104a, 104b) zu empfangen, wobei die erste Überlaufabschirmung (131) konfiguriert ist, um sich mit der Empfangslinse (130) zu bewegen;
eine Ausgangslinse (132), die mit einer zweiten länglichen Überlaufabschirmung (133) gekoppelt ist, wobei die Ausgangslinse konfiguriert ist, um Licht von der Empfangslinse (130) zu empfangen, wobei die zweite Überlaufabschirmung (133) konfiguriert ist, um sich mit der Ausgangslinse (132) zu bewegen, und
wobei die Überlaufabschirmung (131) der Empfangslinse (130) in der Überlaufabschirmung (133) der Ausgangslinse (132) verschachtelt ist.

2. Automatisierte Leuchte gemäß Anspruch 1, wobei der längliche Lichtintegrator (104a) einen quadratischen Eingangsquerschnitt (106a) und einen sechseckigen Ausgangsquerschnitt (108a) aufweist.

3. Automatisierte Leuchte gemäß Anspruch 1, wobei der längliche Lichtintegrator (104b) einen quadratischen Eingangsquerschnitt (106b) und einen achteckigen Ausgangsquerschnitt (108b) aufweist.

4. Automatisierte Leuchte gemäß einem der vorhergehenden Ansprüche, wobei der längliche Lichtintegrator (102, 104a, 104b) verjüngt ist, sodass eine Eintrittsöffnung (106) kleiner ist als eine Austrittsöffnung (108).

5. Automatisierte Leuchte gemäß einem der vorhergehenden Ansprüche, wobei die Empfangslinse (130) und die Ausgangslinse (132) Meniskuslinsen, plankonvexe Linsen oder bikonvexe Linsen sind.

6. Automatisierte Leuchte gemäß Anspruch 5, wobei die Empfangslinse (130) eine plankonvexe Linse ist und die Ausgangslinse (132) eine Meniskuslinse ist.

7. Automatisierte Leuchte gemäß einem der vorhergehenden Ansprüche, wobei die Überlaufabschirmung (131) der Empfangslinse (130) und die Überlaufabschirmung (133) der Ausgangslinse (132) hohle, lichtundurchlässige wandige Rohre beinhalten.

8. Automatisierte Leuchte gemäß einem der vorhergehenden Ansprüche, wobei eine weitere Überlaufabschirmung (135) an der Ausgangslinse (132) angebracht und mit dieser beweglich ist.

9. Automatisierte Leuchte gemäß einem der vorhergehenden Ansprüche, wobei die Empfangslinse (130) unabhängig von der Ausgangslinse (132) beweglich ist.

## Revendications

1. Un luminaire automatisé, comprenant :
une pluralité de sources à DEL (60) ;
un intégrateur de lumière allongé (102, 104a, 104b) configuré pour recevoir de la lumière provenant de la pluralité de sources à DEL (60) ;
une lentille de réception (130) couplée à un premier écran paralume allongé (131), la lentille de réception étant configurée pour recevoir de la lumière provenant de l'intégrateur de lumière (102, 104a, 104b), le premier écran paralume (131) étant configuré pour se déplacer avec la lentille de réception (130) ;
une lentille de sortie (132) couplée à un deuxième écran paralume allongé (133), la lentille de sortie étant configurée pour recevoir de la lumière provenant de la lentille de réception (130), le deuxième écran paralume (133) étant configuré pour se déplacer avec la lentille de sortie (132), et
dans lequel l'écran paralume (131) de la lentille de réception (130) est emboîté dans l'écran paralume (133) de la lentille de sortie (132).

2. Le luminaire automatisé de la revendication 1, dans lequel l'intégrateur de lumière allongé (104a) a une section droite d'entrée carrée (106a) et une section droite de sortie hexagonale (108a).

3. Le luminaire automatisé de la revendication 1, dans lequel l'intégrateur de lumière allongé (104b) a une section droite d'entrée carrée (106b) et une section droite de sortie octogonale (108b).

4. Le luminaire automatisé de n'importe lesquelles des revendications précédentes, dans lequel l'intégrateur de lumière allongé (102, 104a, 104b) est effilé de telle sorte qu'une ouverture d'entrée (106) est plus petite qu'une ouverture de sortie (108).

5. Le luminaire automatisé de n'importe lesquelles des revendications précédentes, dans lequel la lentille de réception (130) et la lentille de sortie (132) sont des lentilles ménisques, des lentilles plan-convexes, ou des lentilles biconvexes.

6. Le luminaire automatisé de la revendication 5, dans lequel la lentille de réception (130) est une lentille plan-convexe et la lentille de sortie (132) est une lentille ménisque.

7. Le luminaire automatisé de n'importe lesquelles des revendications précédentes, dans lequel l'écran paralume (131) de la lentille de réception (130) et l'écran paralume (133) de la lentille de sortie (132) comprennent des tubes creux à parois opaques.

8. Le luminaire automatisé de n'importe lesquelles des revendications précédentes, dans lequel un écran paralume supplémentaire (135) est fixé à, et est déplaçable avec, la lentille de sortie (132).

9. Le luminaire automatisé de n'importe lesquelles des revendications précédentes, dans lequel la lentille de réception (130) est déplaçable indépendamment de la lentille de sortie (132).
